# EUROPÄISCHE PATENTSCHRIFT

(11) **EP 2 174 028 B1**
(45) Veröffentlichungstag und Bekanntmachung des Hinweises auf die Patenterteilung: **18.04.2012**
(21) Anmeldenummer: 08760137.3
(22) Anmeldetag: 28.05.2008
(51) Int. Cl.: F16C 19/38, F16C 19/52, F16C 33/60, F16C 41/00, F16D 65/02

(54) **WÄLZLAGER MIT EINER BREMSEINRICHTUNG**
ANTI-FRICTION BEARING HAVING A BRAKE DEVICE
PALIER À ROULEMENT COMPORTANT UNE UNITÉ DE FREINAGE

(30) Priorität: 25.07.2007 DE 102007034555
(43) Veröffentlichungstag der Anmeldung: 14.04.2010
(73) Patentinhaber: Schaeffler Technologies AG & Co. KG, 91074 Herzogenaurach (DE)
(72) Erfinder: NUISSL, Christian, 90439 Nürnberg (DE); STÖLZLE, Jürgen, 91056 Erlangen (DE)
(86) Internationale Anmeldenummer: PCT/EP2008/056542
(87) Internationale Veröffentlichungsnummer: WO 2009/013047

(56) Entgegenhaltungen:
- EP-B- 0 892 896
- DD-A1- 240 089
- DE-A1- 10 127 487
- DE-A1- 10 319 457
- DE-B- 1 904 954
- US-A- 4 443 045

## Beschreibung

### Gebiet der Erfindung

Die Erfindung betrifft ein Wälzlager mit einer Bremseinrichtung, insbesondere Drehverbindung, bestehend aus einem Lageraußenring und einem Lagerinnenring, zwischen denen auf zugehörigen Laufbahnen Wälzkörper abrollen, wobei zur Erzielung einer Bremswirkung durch Reibschluss ein mit einem der Lagerringe verbundenes verschiebbares Bremselement mit einem Bremsbelag gegen eine mit dem anderen Lagerring verbundene Gegenfläche gepresst ist.

### Hintergrund der Erfindung

Wälzlager mit Bremseinrichtung sind bereits seit langem bekannt. So besteht bei Wälzlagerdrehverbindungen an Windkraftanlagen die Gefahr, dass sie nach relativ kurzer Zeit durch Riffelbildung in den Laufbahnen ausfallen. Dieses Phänomen wird insbesondere durch geringe Schwenkbewegungen zum Ausgleich der Windrichtung erzeugt, bei der es zu einem Gleiten der Wälzkörper auf den Laufbahnen kommt. Um diesen Verschleiß auszuschalten, ist es bekannt, durch verschiedene Maßnahmen den geringen Drehwiderstand bei Wälzlagern zu erhöhen. Die DE 37 25 972 A1 und die DE 41 04 137 A1 schlagen in diesem Zusammenhang vor, eine zusätzlich umlaufende Bremseinrichtung einzusetzen. Die Bremskraft und somit der gewünschte Drehwiderstand kann dann von außen eingestellt werden. Nachteilig dabei ist, dass im ersten Fall das Bremselement nur bei Stilllegung der Windkraftanlage aufgehoben werden kann. Im zweiten Fall besteht die Bremseinrichtung aus vielen mechanischen Einzelteilen und ist dadurch aufwändig zu fertigen und kompliziert in der Handhabung.

Aus der DE 19 04 954 B ist eine drehzapfenlose Drehverbindung für Bagger, Krane oder dergleichen zur Lagerung eines schwenkbaren Oberbaus auf einem Unterbau bekannt. Diese Drehverbindung besteht jeweils aus einem einteiligen Drehring sowie einem zweiteiligen, aus zwei Profilringen zusammengesetzten weiteren Drehring. Die beiden Drehringe sind jeweils durch die Kugeln eines zweireihigen Kugellagers gegeneinander abgestützt und mit einer Bremsvorrichtung ausgerüstet. Die Bremsvorrichtungen weisen jeweils einen oder mehrere Bremsklotzträger auf, die einem mit dem einteiligen Drehring in Verbindung stehenden Bauteil befestigt sind. Bei dieser Anordnung ist von Nachteil, dass die Bremsvorrichtungen außerhalb der eigentlichen Lageranordnung angeordnet sind und daher zusätzlichen Bauraum beanspruchen.

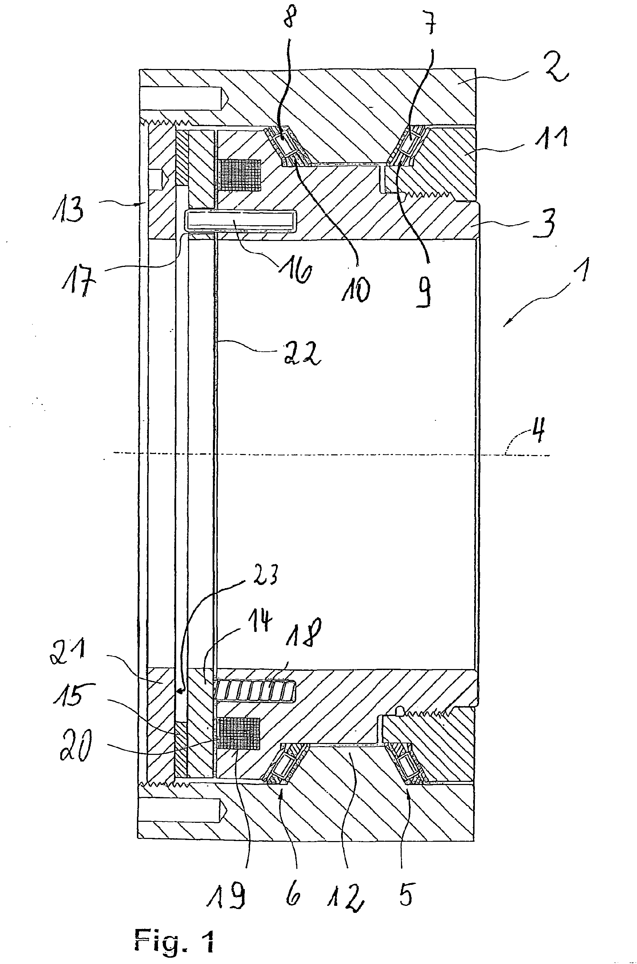

Aus der DE 101 27 487 A1 ist eine weitere Lageranordnung mit Bremsfunktion vorbekannt. Die Radiallageranordnung gemäß Figur 1 weist ein als Radiallager ausgebildetes Rillenkugellager auf und eine axial daneben angeordnete Bremseinrichtung. Das Rillenkugellager besteht aus dem Innenring, dem Au-βenring und zwischen beiden in einem Käfig angeordneten Lagerkugeln. Weiterhin verfügt das Rillenkugellager über zwei Dichtringe, die den Ringraum beidseitig gegen die Umgebung abdichten. Die Bremseinrichtung weist einen inneren und einen äußeren Haltering auf. An einem radial nach außen gerichteten Flansch des inneren Halterings ist über eine Flachdrahtfeder eine Bremsscheibe befestigt, die aus einem ferromagnetischen Material besteht und auf ihrer vom Flansch abgewandten Seite einen Bremsbelag besitzt. Durch die Befestigung mittels der Flachdrahtfeder ist die Bremsscheibe drehfest mit dem inneren Haltering verbunden und in Axialrichtung verschiebbar. Gegenüber dem Bremsbelag ist am äußeren Haltering eine Gegenfläche ausgebildet, gegen die der Bremsbelag beim Bremsen gepresst wird. Der äußere Haltering weist weiterhin eine elektrische Spule und einen oder mehrere Permanentmagneten auf, die jeweils im Bereich zwischen der Bremsscheibe und dem Rillenkugellager angeordnet sind und mechanisch mit dem äußeren Haltering und somit auch mit der Gegenfläche verbunden sind.

Nachteilig dabei ist, dass die Bremseinrichtung in axialer Richtung als externes Teil an das Lager angeflanscht werden muss und daher zusätzlichen Bauraum beansprucht. Die Halteringe sind relativ kompliziert aufgebaut und müssen erst in aufwändiger Weise durch Stifte mit den Lagerringen verbunden werden. Ein weiterer Nachteil ist dadurch begründet, dass die Bremswirkung durch einen Permanentmagneten ausgelöst wird, der die Bremsscheibe anzieht. Bei bestimmten Anwendungsfällen ist aber ein stetiges Magnetfeld nachteilig, da unter Umständen eisenhaltiger Schmutz vom Lager angezogen wird.

Darüber hinaus haftet allen vorstehend beschriebenen Lagern mit Bremseinrichtung der Nachteil an, dass die Bremseinrichtung aufgrund der relativ geringen Bremswirkung groß ausgelegt werden muss, was viel Bauraum beansprucht.

### Zusammenfassung der Erfindung

Der Erfindung liegt daher die Aufgabe zugrunde, die vorstehend genannten Nachteile zu vermeiden und eine einfach zu fertigende Bremsvorrichtung bereitzustellen, die eine wesentliche verbesserte Bremswirkung entfaltet und die einen minimalen Bauraum beansprucht.

Erfindungsgemäß wird diese Aufgabe nach dem kennzeichnenden Teil von Anspruch 1 in Verbindung mit dessen Oberbegriff dadurch gelöst, dass die Gegenfläche mit einer die Reibung erhöhenden Beschichtung versehen ist, die aus einem Grundmaterial und mindestens einem eingelagerten Zusatzmaterial besteht, wobei das Grundmaterial eine stufenlos abgeschiedene Nickel-Phosphor-Schicht ist und das Zwischenmaterial durch einen Kunststoff, Bornitrid, Diamant oder Siliziumcarbid gebildet wird.

Somit weist die vorliegende erfindungsgemäße Bremseinrichtung des Wälzlagers gegenüber den eingangs genannten Bremsanordnungen den Vorteil auf, dass sich durch die Beschichtung der Gesamtreibwert der Lageranordnung wesentlich erhöht. Da der Reibwert unmittelbar auf die Größe des Gesamtsystems Einfluss nimmt, kann entweder bei gleich bleibender Reibleistung die Baueinheit kleiner dimensioniert werden, was zu Kosten- und Bauraumvorteilen führt, oder, es kann bei gleich bleibender Dimensionierung der Lageranordnung die Reibleistung erhöht werden, sodass größere Bremskräfte übertragbar sind. Hinzu kommt als weiterer Vorteil, dass sich der Reibwert wesentlich schneller auf seinen Sollwert einstellt, d. h., das Einlaufverhalten der Reibpartner ist verbessert.

Dabei hat es sich nach einem weiteren Merkmal der Erfindung als vorteilhaft erwiesen, wenn das Zusatzmaterial eine Partikelgröße ≤ 3 µm aufweist.

Nach der Erfindung ist zusätzlich vorgesehen, dass das Grundmaterial eine stromlos abgeschiedene Nickel-Phosphor-Schicht ist und das eingelagerte Zusatzmaterial aus einem Kunststoff, Bornitrid, Diamant oder Siliziumcarbid besteht.

Wie der Fachmann weiß, werden chemische Nickelschichten außenstromlos abgeschieden. Dazu wird das zu beschichtende Werkstück in eine wässrige Lösung getaucht. Die in der Lösung enthaltenen Nickelionen werden mit Hilfe von Elektronen der Hypophosphit-Ionen zu metallischem Nickel reduziert. Das Hypophosphit wiederum gibt in Anwesenheit eines Katalysators Phosphor frei, der in die Schicht eingebaut wird. Dabei wirken aus Eisenwerkstoffe bestehende Werkstücke selbst als Katalysator. Auch die entstehende Nickelschicht wirkt noch katalytisch, sodass erst durch das Herausnehmen des Werkstückes die Abscheidung beendet ist. Die chemische Vernicklung hat den Vorteil, gleichmäßig dicke Schichten zu liefern. Es lassen sich alle Bereiche des Werkstückes mit derselben Schichtdicke beschichten, selbst scharfe Kanten, Hohlräume und Hinterschneidungen. Bei der galvanischen Abscheidung dagegen können durch örtlich unterschiedliche Stromdichten ungleichmäßige Schichtdicken entstehen. Durch den Phosphorgehalt unterscheiden sich die chemischen Nickelschichten zum Teil erheblich von den phosphorfreien galvanisch abgeschiedenen oder metallurgisch hergestellten Schichten. Eine Änderung des Phosphorgehaltes beeinflusst die Eigenschaften der Schichten ganz gezielt, wobei die Phosphorkonzentration für viele funktionelle Schichteigenschaften maßgebend ist. Autokatalytische Nickel-Phosphor-Überzüge werden vor allem abgeschieden, um den Korrosionsschutz zu verbessern und um die Verschleißbeständigkeit zu erhöhen.

Es hat sich aber nach einem weiteren Merkmal als vorteilhaft erwiesen, wenn der Phosphor-Masseanteil von ≤ 8 % beträgt, da bei diesem Wert eine hohe Verschleißbeständigkeit gegeben ist, auf die es im Sinne der Erfindung besonders ankommt. Eine gute Verschleißbeständigkeit der Nickel-Phosphor-Beschichtung ist bei einer Schichtdicke gegeben, die im Bereich von 10 bis 20 µm liegt.

Es hat sich als besonders vorteilhaft erwiesen, wenn der Nickelschicht Zusatzmaterial in Form von Siliziumcarbid zugesetzt ist, das eine Korngröße von 0,6 - 1,5 µm aufweist. Durch diese Einbettung von Siliziumcarbidteilchen erhöhen sich die Härte und Verschleißfestigkeit der stromlos abgeschiedenen Nickel-Phosphor-Schichten sowohl bei normalen als auch bei erhöhten Temperaturen. Die angegebene Korngröße ist vorteilhaft, da bei einer größeren Korngröße mit einer Zerstörung des Reibbelages gerechnet werden muss. Es hat sich in diesem Zusammenhang auch als vorteilhaft erwiesen, wenn das Siliziumcarbid mit einer Rate zwischen 30 und 35 Volumen-% in der Nickel-Phosphor-Schicht eingelagert ist.

Es ist weiter von Vorteil, dass das Bremselement aus einer mit dem Bremsbelag verbundenen ferromagnetischen Ankerplatte, die im Lagerinnenring über mehrere in Umfangsrichtung voneinander beabstandete Führungsstifte axial verschiebbar gehalten und über mehrere in Umfangsrichtung voneinander beabstandete Federelement mit einer Vorspannung beaufschlagt ist, und aus einer im Lagerinnenring angeordneten Spule besteht, wobei im stromlosen Zustand der Spule zwischen der Ankerplatte und dem Lagerinnenring ein Luftspalt gebildet ist.

Auf diese Weise ist eine Lageranordnung mit Bremseinrichtung geschaffen, bei der die Bremseinrichtung nahezu keinen zusätzlichen Bauraum benötigt, da sie integraler Bestandteil des Lagers ist. Durch Unterbringen des Bremselementes in einem der Lagerringe, im Normalfall im sich drehenden Lagerring, wird es auf diese Weise möglich, das Wälzlager mit Bremseinrichtung raumsparend zu realisieren. Ein weiterer Vorteil liegt darin, dass durch die Anordnung der Bremseinrichtung als integraler Wälzlagerbestandteil diese nicht in zusätzlicher und aufwändiger Weise mit der Lageranordnung zu verbinden ist. Es ist auch von Vorteil, dass durch den Einsatz unterschiedlich dimensionierter Federn in einfacher Weise auf die Größe der Vorspannkraft und damit auch auf die aufzubringende Bremskraft eingewirkt werden kann.

Nach einem anderen weiteren Merkmal ist vorgesehen, dass die Gegenfläche aus einem Stahlwerkstoff gefertigt und als eine mit dem Lageraußenring verbundene kreisringartige Druckplatte ausgebildet ist. Der Stahlwerkstoff hat den Vorteil, dass er einerseits aufgrund seiner hohen Festigkeit hohe Kräfte übertragen kann und andererseits mit der Nickel-Phosphor-Schicht problemlos beschichtet werden kann.

Nach einem weiteren zusätzlichen Merkmal sollen die Wälzkörper durch Lagernadeln zweier entgegengerichteter Axialschrägnadellager gebildet sein, wobei ein Schnittpunkt von deren verlängerter Drehachsen im Lagerinnen- oder im Lageraußenring liegt. Gegenüber den bekannten Drehverbindungen, die bevorzugt als Vierpunktlager oder als Kreuzrollenlager ausgeführt sind, ist bei Verwendung von zwei Axialschrägnadellagem bei gleicher oder höherer Tragzahl die Fertigung wesentlich kostengünstiger. In diesem Zusammenhang hat es sich nach einem weiteren Merkmal der Erfindung auch als vorteilhaft erwiesen, dass die Wälzkörper durch Lagerkugeln gebildet sind, die zueinander in O-Anordnung angestellt sind. Aufgrund der verbesserten Abrollverhältnisse der Lagerkugeln lassen sich solche Wälzlager insbesondere für dynamische Anwendungsfälle bevorzugt einsetzen.

Schließlich ist nach einem letzten Merkmal der Erfindung vorgesehen, dass der Lagerinnenring zur Einstellung der Vorspannung zweiteilig ausgebildet ist, wobei dieser mit einer in axialer Richtung verschiebbaren Stellmutter verbunden ist. Auf diese Weise lässt sich durch Stellung der beiden in axialer Richtung voneinander beabstandeten Wälzlager in einfacher Weise auf die Lagervorspannung einwirken.

Weitere Merkmale der Erfindung ergeben sich aus der nachfolgenden Beschreibung und aus den Zeichnungen, in denen ein Ausführungsbeispiel der Erfindung in vereinfachter Form dargestellt ist.

### Kurze Beschreibung der Zeichnungen

Es zeigen:
- Figur 1: einen Axialschnitt durch ein erfindungsgemäß ausgebildetes Wälzlager entlang der Linie I-I in Figur 2,
- Figur 2: eine Seitenansicht des erfindungsgemäßen Wälzlagers und
- Figur 3: zeichnerische Darstellung einer Rasterelektronenmikroskopaufnahme von Nickel-Phosphor-Beschichtungen mit eingelagertem Siliziumcarbid.

### Ausführliche Beschreibung der Zeichnungen

Zunächst wird auf den konstruktiven Aufbau des Wälzlagers 1 Bezug genommen.

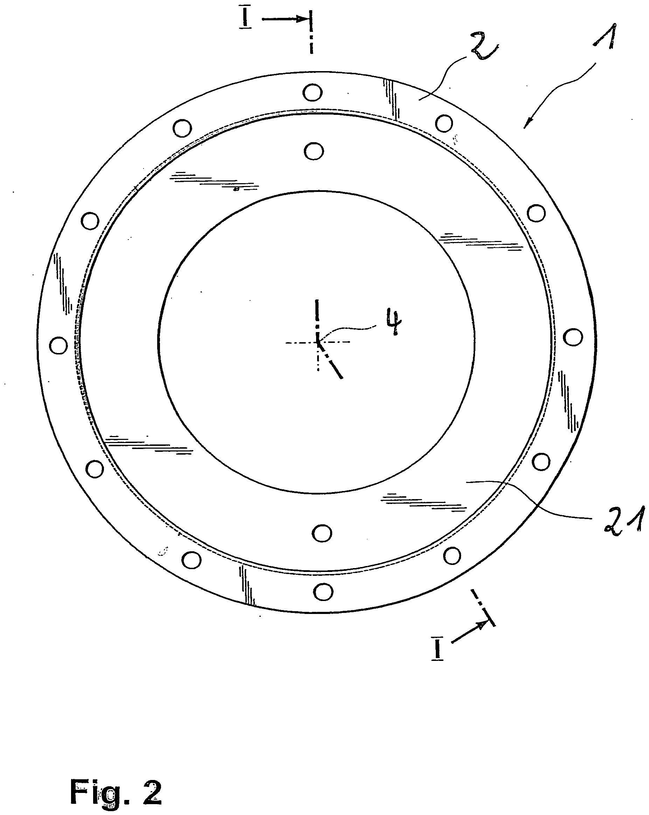

Das in den Figuren 1 und 2 gezeigte Wälzlager 1 besteht aus dem Lagerau-βenring 2 und dem Lagerinnenring 3, die konzentrisch um die Lagerachse 4 ineinander angeordnet sind. Im zwischen beiden gebildeten Ringraum sind Axialschrägnadellager 5, 6 angeordnet, die zueinander in O-Anordnung angestellt sind. Beide weisen Wälzkörper in Form von Lagernadeln 7, 8 auf, die in je einem Käfig 9, 10 geführt sind, wobei sich die verlängerten Drehachsen der Lagernadeln 7, 8 in einem Punkt schneiden, der im Lagerinnenring 3 liegt. Zu den Axialschrägnadellagern 5, 6 gehören jeweils zwei nicht näher bezeichnete Laufscheiben, die die Laufbahnen für die Lagernadeln 7, 8 stellen. Die Figur 1 lässt erkennen, dass der Neigungswinkel der Lager 5, 6 veränderbar sein kann und somit das Verhältnis von radialer und axialer Kraftaufnahme beeinflusst werden kann. Wie weiter ersichtlich, ist der Lagerinnenring 3 zweiteilig ausgebildet, wobei die Stellmutter 11 mit ihrem nicht bezeichneten Innengewinde auf ein nicht bezeichnetes Außengewinde des Lagerinnenrings 3 aufgeschraubt und damit in axialer Richtung verschiebbar ist. Auf diese Weise kann die Lagervorspannung in einfacher Weise durch Anziehen der Stellmutter 11 eingestellt werden, wobei die beiden Axialschrägnadellager 5, 6 gegen den V-förmigen Vorsprung 12 des Lageraußenringes 2 gepresst werden.

Das erfindungsgemäße Bremselement 13 besteht aus der ferromagnetischen Ankerplatte 14, die kreisringartig ausgebildet ist und an ihrer axial nach außen weisenden Stirnseite mit dem Bremsbelag 15 versehen ist. Die andere Stirnseite der Ankerplatte 14 liegt an der Stirnseite des Lagerinnenrings 3 an und ist mit diesem über Führungsstifte 16 verbunden. Dabei sind im Lagerinnenring 3 in Umfangsrichtung mehrere voneinander beabstandete Führungsstifte 16 fest positioniert. Diese Führungsstifte 16 greifen in zugehörige Bohrungen 17 der Ankerplatte 14 ein, wobei die Bohrungen 17 im Durchmesser etwas größer als die Durchmesser der Führungsstifte 16 sind. Auf diese Weise ist sichergestellt, dass die Ankerplatte 14 im Lagerinnenring 3 axial verschiebbar gehalten ist, wobei diese durch gleichmäßig in Umfangsrichtung voneinander beabstandete Federelemente 18 unter Vorspannung gesetzt ist. Wie weiter erkennbar, ist der Lagerinnenring 3 mit einer in axialer Richtung offenen Ausnehmung 19 versehen, in der die Spule 20 angeordnet ist. Zum Bremselement 13 gehört weiter die Druckplatte 21, die mit ihrem Außengewinde im Lageraußenring 2 über dessen Innengewinde aufgenommen ist. Auf diese Weise ist es möglich, durch eine unterschiedliche axiale Stellung der Druckplatte 21 im Lageraußenring 2 den Luftspalt 22 zu justieren.

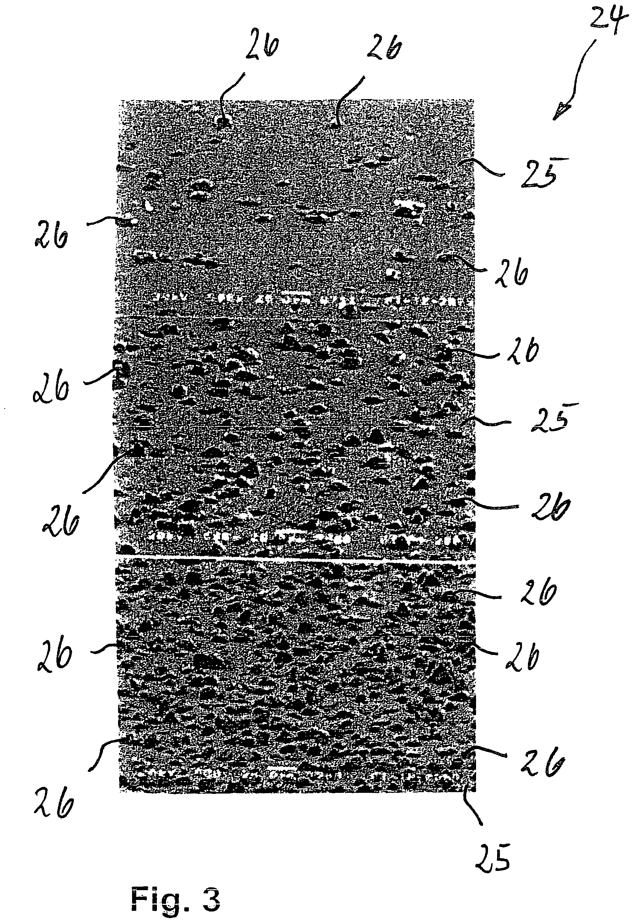

Die aus einem Stahlwerkstoff gefertigte Druckplatte 21 wird vor dem Einbau in das Wälzlager 1 zur Verbesserung der Haftfähigkeit der Beschichtung 24 einer entsprechenden Vorbehandlung unterzogen. So ist beispielsweise darauf zu achten, dass das Reinigen, Entfetten und Aktivieren sehr intensiv sein muss, um nicht nur metallurgisch inhomogene Oberflächen- und anorganische Passivschichten zu entfernen, sondern für die Vernicklung eine katalytisch aktive Oberfläche zu schaffen. Danach wird die Druckplatte 21 durch Eintauchen in eine entsprechende Badlösung autokatalytisch an ihrer gesamten Oberfläche mit einer Nickel-Phosphor-Beschichtung 24 überzogen. Dazu werden in vielen Fällen Bäder auf Hypophosphit-Basis verwendet, bei denen das Reduktionsmittel Natriumhypophosphit Elektronenlieferant für die Reduktion der Nickelionen ist. Diese Schicht 24 erstreckt sich demnach auch über die Seitenfläche der Druckscheibe 21, die dem Bremsbelag 15 zugewandt ist und als Gegenfläche 23 bezeichnet ist. Die Beschichtung 24 weist eine Dicke von 12 µm auf und besteht, wie aus Figur 3 ersichtlich, aus dem Grundmaterial 25 und in Form von Nickel-Phosphor und dem eingelagerten Zusatzmaterial 26 in Form von Siliziumcarbid. Dabei kann, wie Figur 3 weiter zeigt, die Einlagerungsrate des Siliziumcarbids von oben nach unten zunehmen. Dies bedeutet, dass je nach gegebenem Anwendungsfall eine beliebig hohe Anzahl von Siliziumcarbiden eingelagert werden kann. Diese eingelagerten Siliziumcarbidteilchen erhöhen die Härte und Verschleißfestigkeit der stromlos abgeschiedenen Nickel-Phosphor-Schicht sowohl bei normalen als auch bei erhöhten Temperaturen. Die mit einer solchen Ni-SiC-Dispersionsschicht 24 versehene Druckplatte 21 erreicht einen Reibwert von 0,7 bis 0,9, während nach dem bisherigen Stand der Technik Reibwerte zwischen Bremsbelägen und Stahl von 0,3 bis 0,4 üblich sind. Durch die Erhöhung des Reibwerts lassen sich wesentlich höhere Bremsleistungen realisieren, sodass die Bremseinrichtung einen vergleichsweise geringen Platzbedarf hat. Die stromlose abgeschiedene Nickel-Phosphor-Beschichtung mit den eingelagertem SiC-Partikeln ergibt einen Werkstoffverbund, der eine hohe Härte, sehr gute Verschleiß- und Abriebsfestigkeit, gute Korrosionsbeständigkeit und eine gute chemische Beständigkeit aufweist, wobei im Sinne der Erfindung insbesondere die drei ersten Eigenschaften von Bedeutung sind.

### Bezugszeichen

- 1: Wälzlager
- 2: Lageraußenring
- 3: Lagerinnenring
- 4: Lagerachse
- 5: Axialschrägnadellager
- 6: Axialschrägnadellager
- 7: Lagernadel
- 8: Lagernadel
- 9: Käfig
- 10: Käfig
- 11: Stellmutter
- 12: Vorsprung
- 13: Bremselement
- 14: Ankerplatte
- 15: Bremsbelag
- 16: Führungsstift
- 17: Bohrung
- 18: Federelement
- 19: Ausnehmung
- 20: Spule
- 21: Druckplatte
- 22: Luftspalt
- 23: Gegenfläche
- 24: Beschichtung
- 25: Grundmaterial
- 26: Zusatzmaterial

## Patentansprüche

1. Wälzlager (1) mit einer Bremseinrichtung, insbesondere Drehverbindung, bestehend aus einem Lageraußenring (2) und einem Lagerinnenring (3), zwischen denen auf zugehörigen Laufbahnen Wälzkörper abrollen, wobei zur Erzielung einer Bremswirkung durch Reibschluss ein mit einem der Lagerringe (3, 2) verbundenes verschiebbares Bremselement mit einem Bremsbelag (15) gegen eine mit dem anderen Lagerring (2, 3) verbundene Gegenfläche (23) gepresst ist, **dadurch gekennzeichnet, dass** die Gegenfläche (23) mit einer die Reibung erhöhenden Beschichtung (24) versehen ist, die aus einem Grundmaterial (25) und mindestens einem eingelagerten Zusatzmaterial (26) besteht, wobei das Grundmaterial (25) eine stromlos abgeschiedene Nickel-Phosphor-Schicht ist und das Zusatzmaterial (26) durch einen Kunststoff, Bornitrid, Diamant oder Siliziumcarbid gebildet wird.

2. Wälzlager (1) nach Anspruch 1, **dadurch gekennzeichnet, dass** das Zusatzmaterial (26) eine Partikelgröße ≤ 3 µm aufweist.

3. Wälzlager (1) nach Anspruch 1, **dadurch gekennzeichnet, dass** das Siliziumcarbid eine Korngröße von 0,6 - 1,5 µm aufweist.

4. Wälzlager (1) nach Anspruch 1, **dadurch gekennzeichnet, dass** die Nickel-Phosphor-Schicht einen Phosphor-Masseanteil von ≤ 8 % enthält.

5. Wälzlager (1) nach Anspruch 1, **dadurch gekennzeichnet, dass** die Nickel-Phosphor-Schicht eine Stärke von 10 bis 20 µm aufweist.

6. Wälzlager (1) nach Anspruch 1, **dadurch gekennzeichnet, dass** die Nickel-Phosphor-Schicht eine Einlagerungsrate von 30-35 Vol.-% Siliziumcarbid aufweist.

7. Wälzlager (1) nach Anspruch 1, **dadurch gekennzeichnet, dass** das Bremselement (13) aus einer mit dem Bremsbelag (15) verbundenen ferromagnetischen Ankerplatte (14), die im Lagerinnenring (3) über mehrere in Umfangsrichtung voneinander beabstandete Führungsstifte (16) axial verschiebbar gehalten und über mehrere in Umfangsrichtung voneinander beabstandete Federelemente (18) mit einer Vorspannung beaufschlagt ist, und aus einer im Lagerinnenring (3) angeordneten Spule (20) besteht, wobei im stromlosen Zustand der Spule (20) zwischen der Ankerplatte (14) und dem Lagerinnenring (3) ein Luftspalt (22) gebildet ist.

8. Wälzlager (1) nach Anspruch 1, **dadurch gekennzeichnet, dass** die Gegenfläche (23) aus einem Stahlwerkstoff gefertigt und als eine mit dem Lageraußenring (2) verbundene kreisringartige Druckplatte (21) ausgebildet ist.

9. Wälzlager (1) nach Anspruch 1, **dadurch gekennzeichnet, dass** die Wälzkörper durch Lagernadeln (7, 8) zweier entgegen gerichteter Axialschrägnadellager (5, 6) gebildet sind, wobei ein Schnittpunkt von deren verlängerter Drehachsen im Lagerinnen- (3) oder im Lageraußenring (2) liegt.

10. Wälzlager (1) nach Anspruch 1, **dadurch gekennzeichnet, dass** der Lagerinnenring (3) zur Einstellung der Vorspannung zweiteilig ausgebildet ist, wobei dieser mit einer in axialer Richtung verschiebbaren Stellmutter (11) verbunden ist.

## Claims

1. Anti-friction bearing (1) having a brake device, in particular rotary joint, composed of a bearing outer ring (2) and a bearing inner ring (3), between which rolling bodies roll on associated raceways, with a movable brake element which is connected to one of the bearing rings (3, 2) being pressed with a brake lining (15) against a mating surface (23), which is connected to the other bearing ring (2, 3), in order to obtain a braking action by means of frictional engagement, **characterized in that** the mating surface (23) is provided with a friction-increasing coating (24) which is composed of a basic material (25) and at least one incorporated additive material (26), wherein the basic material (25) is an electrolessly deposited nickel-phosphor layer and the additive material (26) is formed by a plastic, boron nitride, diamond or silicon carbide.

2. Anti-friction bearing (1) according to Claim 1, **characterized in that** the additive material (26) has a particle size of ≤ 3 µm.

3. Anti-friction bearing (1) according to Claim 1, **characterized in that** the silicon carbide has a grain size of 0.6 - 1.5 µm.

4. Anti-friction bearing (1) according to Claim 1, **characterized in that** the nickel-phosphor layer comprises a mass fraction of phosphor of ≤ 8 %.

5. Anti-friction bearing (1) according to Claim 1, **characterized in that** the nickel-phosphor layer has a thickness of 10 to 20 µm.

6. Anti-friction bearing (1) according to Claim 1, **characterized in that** the nickel-phosphor layer has a rate of incorporation of 30 - 35 % by volume of silicon carbide.

7. Anti-friction bearing (1) according to Claim 1, **characterized in that** the brake element (13) is formed from a ferromagnetic armature plate (14) which is connected to the brake lining (15) and which is held in an axially movable manner in the bearing inner ring (3) by means of a plurality of guide pins (16) spaced apart in the circumferential direction and which is acted on with a preload by means of a plurality of spring elements (18) spaced apart in the circumferential direction, and from a coil (20) which is arranged in the bearing inner ring (3), with an air gap (22) being formed between the armature plate (14) and the bearing inner ring (3) when the coil (20) is in the currentless state.

8. Anti-friction bearing (1) according to Claim 1, **characterized in that** the mating surface (23) is produced from a steel material and is formed as a circular-ring-shaped pressure plate (21) which is connected to the bearing outer ring (2).

9. Anti-friction bearing (1) according to Claim 1, **characterized in that** the rolling bodies are formed by bearing needles (7, 8) of two oppositely-aligned axial angular-contact needle bearings (5, 6), with a point of intersection of the projected rotational axes of said rolling bodies being situated in the bearing inner ring (3) or in the bearing outer ring (2).

10. Anti-friction bearing (1) according to Claim 1, **characterized in that** the bearing inner ring (3) is formed in two parts for the purpose of adjusting the preload, with said bearing inner ring (3) being connected to an adjusting nut (11) which is movable in the axial direction.

## Revendications

1. Palier à roulement (1) comportant une unité de freinage, en particulier assemblage rotatif, se composant d'une bague de palier extérieure (2) et d'une bague de palier intérieure (3), entre lesquelles des corps de roulement roulent sur des chemins de roulement correspondants, dans lequel, pour produire une action de freinage par frottement, un élément de frein déplaçable muni d'une garniture de frein (15) et relié à l'une des bagues de palier (3, 2) peut être pressé contre une surface opposée (23) liée à l'autre bague de palier (2, 3), **caractérisé en ce que** la surface opposée (23) est dotée d'un revêtement (24) augmentant le frottement, qui se compose d'un matériau de base (25) et d'au moins un matériau d'addition intégré (26), dans lequel le matériau de base (25) est une couche de nickel-phosphore déposée sans courant et le matériau d'addition (26) est formé par une matière plastique, le nitrure de bore, le diamant ou le carbure de silicium.

2. Palier à roulement (1) selon la revendication 1, **caractérisé en ce que** le matériau d'addition (26) présente une taille de particules ≤ 3 µm.

3. Palier à roulement (1) selon la revendication 1, **caractérisé en ce que** le carbure de silicium présente une taille de grains de 0,6 à 1,5 µm.

4. Palier à roulement (1) selon la revendication 1, **caractérisé en ce que** la couche de nickel-phosphore présente une teneur massique en phosphore de ≤ 8 %.

5. Palier à roulement (1) selon la revendication 1, **caractérisé en ce que** la couche de nickel-phosphore présente une épaisseur de 10 à 20 µm.

6. Palier à roulement (1) selon la revendication 1, **caractérisé en ce que** la couche de nickel-phosphore présente un taux d'intégration de 30 - 35 % en volume de carbure de silicium.

7. Palier à roulement (1) selon la revendication 1, **caractérisé en ce que** l'élément de frein (13) se compose d'une plaque d'induit ferromagnétique (14) liée à la garniture de frein (15), qui est tenue de façon déplaçable en direction axiale dans la bague de palier intérieure (3) au moyen de plusieurs tiges de guidage (16) espacées l'une de l'autre en direction périphérique et qui est soumise à une précontrainte au moyen de plusieurs éléments de ressort (18) espacés l'un de l'autre en direction périphérique, et d'une bobine (20) disposée dans la bague de palier intérieure (3), dans lequel un entrefer (22) est formé entre la plaque d'induit (14) et la bague de palier intérieure (3) lorsque la bobine (20) se trouve sans courant.

8. Palier à roulement (1) selon la revendication 1, **caractérisé en ce que** la surface opposée (23) est fabriquée en un matériau d'acier et est réalisée sous la forme d'une plaque de pression annulaire (21) assemblée à la bague de palier extérieure (2).

9. Palier à roulement (1) selon la revendication 1, **caractérisé en ce que** les corps de roulement sont formés par des aiguilles de palier (7, 8) de deux paliers axiaux à aiguilles obliques (5, 6), dans lequel un point d'intersection de leurs axes de rotation prolongés se situe dans la bague de palier intérieure (3) ou dans la bague de palier extérieure (2).

10. Palier à roulement (1) selon la revendication 1, **caractérisé en ce que** la bague de palier intérieure (3) est réalisée en deux parties en vue du réglage de la précontrainte, dans lequel celle-ci est assemblée à un écrou de réglage (11) déplaçable en direction axiale.
